# EUROPEAN PATENT SPECIFICATION

(11) **EP 2 760 155 B1**
(45) Date of publication and mention of the grant of the patent: **25.04.2018**
(21) Application number: 13152339.1
(22) Date of filing: 23.01.2013
(51) Int. Cl.: H04L 12/18

(54) **Community scheduler system and scheduling method in a community**
Zeitplanersystem für Community sowie Zeitplanungsverfahren in Community
Système de planification dans une communauté et procédé de planification dans une communauté

(43) Date of publication of application: 30.07.2014
(73) Proprietor: Lee, Chung Jong, Seoul 152-848 (KR)
(72) Inventor: Lee, Chung Jong, Seoul 152-848 (KR)
(74) Representative: reuteler & cie SA

(56) References cited:
- US-A1- 2006 047 557
- US-A1- 2010 022 225
- US-A1- 2011 141 951

## Description

### 1. Technical Field

The present invention relates to a community scheduler system and a scheduling method in a community and, more particularly, to a community scheduler system and a scheduling method in a community which are capable of automatically implementing meeting scheduling in a community.

### 2. Description of the Related Art

Lots of community type web sites are recently being constructed which provide a place for communication between limited friends and a place known to people who have a common topic on the Internet. Service for providing the places is called social networking service and has recently been developed in recent several years.

The outline of Social Networking Service (hereinafter referred to as 'SNS') is described below. A web site that provides SNS (hereinafter referred to as an 'SNS site') is characterized in that people can exchange various pieces of information interactively in real time through the web site like a bulletin board or a diary.

A common bulletin board or a weblog like a diary is problematic in that a number of anonymous and slanderous comments are posted. In contrast, a number of SNS sites have introduced a system in which a specific person cannot participate in the SNS sites if the existing member does not introduce the specific person. An SNS site is being developed into a tendency that the exchange of opinions or interchange from a responsible standpoint is performed by opening names or titles to each other in principle.

Accordingly, an SNS site can be used safely because anonymous and slanderous comments can be prevented from being posted. A type in which a person takes part in a community established in this SNS site (hereinafter referred to as a 'cyber community') includes a closed type in which a person cannot be registered with an SNS site if there is no introduction from the existing member and an open type in which a person can be freely registered with an SNS site. In either type, in order for a person to participate in a cyber community, the person's request for the participation has to be received so that the cyber community can approve the participation.

In participation in most cyber communities, however, a meeting at which only a few members can take part in a cyber community can be organized through a mutual dialogue, such as one-to-one or one-to-many for the purpose of friendship, association, and interchange. However, a meeting at which all the members of a cyber community can take part in the cyber community cannot be organized by a current SNS form.

Furthermore, in the organization of a common offline meeting, a manger who actually supervises a meeting and invites participants must check whether each person will participate in the offline meeting or not and the time when the person can participate in the offline meeting by asking persons through a telephone, e-mail, and/or a text message one by one because the manger cannot check pieces of information related to the appointed times of most people in advance. Document US 2006/0047557 A1 discloses techniques for resolving conflicts in scheduling conferences.

### SUMMARY OF THE INVENTION

The present invention has been made keeping in mind the above problems occurring in the prior art, and an object of the present invention is to provide a community scheduler system and a scheduling method in a community, which are capable of realizing a new form of a community by automatically processing the organization of a meeting in a community that is established in an SNS site according to a predetermined scheduling algorithm including the order of priority and a next order in order to facilitate the organization of the meeting.

The characteristics of the present invention for achieving the object of the present invention and performing the characteristic functions of the present invention are as follows.

In accordance with an aspect of the present invention, there is provided a community scheduler system, including a member information management server configured to distinguish a plurality of communities established in a Social Networking Service (SNS) site from one another and manage and store information on members of the communities; and an SNS server configured to provide SNS to the members of each of the communities based on the information on the members of the communities, wherein the SNS server includes an attendance group database (DB) configured to register each of the members as one of an essential attendance group, a selective attendance group and an irrelevance attendance group based on the information on the members of the communities; and a scheduler server configured to sequentially assign the order of priority to the essential attendance group, the selective attendance group, and the irrelevance attendance group and determine a meeting date that has been selected the most in response to information on a plurality of meeting dates known to the members of the communities only when the number of members of each attendance group according to the order of priority is satisfied or not.

Here, if the attendance group DB in accordance with an aspect of the present invention registers the sponsor, the superintendent, and the legislative members, from among the members of the community, as the essential attendance group, the scheduler server may include a first scheduling module for checking whether the number of members is satisfied or not by determining whether the number of members of the sponsor, the superintendent, and the legislative members included in the essential attendance group falls within a range of a predetermined numerical value or not.

Furthermore, if the attendance group DB in accordance with an aspect of the present invention registers the sponsor, the superintendent, the legislative members, and the quorum, from among the members of the community, as the selective attendance group, the scheduler server may include a second scheduling module for checking whether the number of members is satisfied or not by determining whether the number of members of the sponsor, the superintendent, the legislative members, and the quorum included in the selective attendance group falls within a range of a predetermined numerical value or not.

Furthermore, if the attendance group DB in accordance with an aspect of the present invention registers the sponsor, the superintendent, the legislative members, the quorum, and the number of optioners, from among the members of the community, as the irrelevance attendance group, the scheduler server may include a third scheduling module for checking whether the number of members is satisfied or not by determining whether the number of members of the sponsor, the superintendent, the legislative members, the quorum, and the number of optioners included in the irrelevance attendance group falls within a range of a predetermined numerical value or not.

Furthermore, the scheduler server in accordance with an aspect of the present invention may further include a meeting date collection module for receiving a plurality of meeting dates generated at the request of the superintendent of a specific community, transferring the meeting schedules to the members of the specific community, and collecting meeting dates selected by the members of the specific community in response to the transfer; and a meeting date determination module for incorporating information on a meeting date that has been selected the most, from among pieces of information on the meeting dates collected by the meeting date collection module, into an affirmative determination corresponding to a range of a numerical value and transferring information on whether a meeting will be organized or not to all the member of the specific community.

Furthermore, in accordance with another aspect of the present invention, there is provided a scheduling method in a community, including the steps of (a) an SNS server receiving information on a meeting date, including a meeting object, a meeting place, and a plurality of meeting dates and times, from the superintendent of a community; (b) the SNS server transferring the received information on the meeting dates to the scheduler terminals or a variety of devices of all the members of the community; (c) the SNS server receiving information on whether all the members of the community will participate in a meeting or not and on meeting dates selected by all the members in response to the information on the meeting dates; (d) the SNS server determining whether the number of members for each attendance group defined according to the order of priority is satisfied or not based on the information on whether all the members of the community will participate in the meeting or not; and (e) if a result of the determination at the step (d) is affirmative, the SNS server extracting a meeting date that has been selected the most based on information on a first meeting date transmitted by members who will participate in the meeting, from among pieces of information on the meeting dates, and determining a meeting schedule based on the extracted the meeting date.

Here, the scheduling method in a community in accordance with another aspect of the present invention may further include the steps of (f) the SNS server notifying the scheduler terminal or a variety of the devices of the superintendent of the extracted meeting date; (g) the superintendent generating information on the meeting based on the meeting date checked by the scheduler terminal or a variety of the devices and transmitting the generated information to the SNS server; and (h) the SNS server transferring the received information on the meeting to the scheduler terminals of all the members including the scheduler terminals of the subjects who will participate in the meeting.

Furthermore, the scheduling method in a community in accordance with another aspect of the present invention may further include the step of (i) the SNS server generating information on the meeting based on the extracted meeting date and notifying the scheduler terminals of all the members, including a scheduler terminal of the superintendent, of the information on the meeting.

Furthermore, the information on the meeting schedule may include information on a meeting object, a meeting place, and a plurality of meeting dates and times.

### BRIEF DESCRIPTION OF THE DRAWINGS

FIG. 1 shows a construction of a community scheduler system 1000 in accordance with a first embodiment of the present invention;
FIG. 2 shows a detailed construction of an SNS server 120 in accordance with the first embodiment of the present invention;
FIG. 3 is an exemplary diagram illustrating a scheduling method S200 in a community in accordance with a second embodiment of the present invention; and
FIG. 4 is an exemplary diagram illustrating a scheduling method S300 in a community in accordance with a third embodiment of the present invention.

### DETAILED DESCRIPTION

Hereinafter, some embodiments of the present invention are described in detail with reference to the accompanying drawings in order for those skilled in the art to be able to readily implement the invention. In the drawings, similar reference numerals are used to designate the same or similar functions from several aspects.

### First embodiment

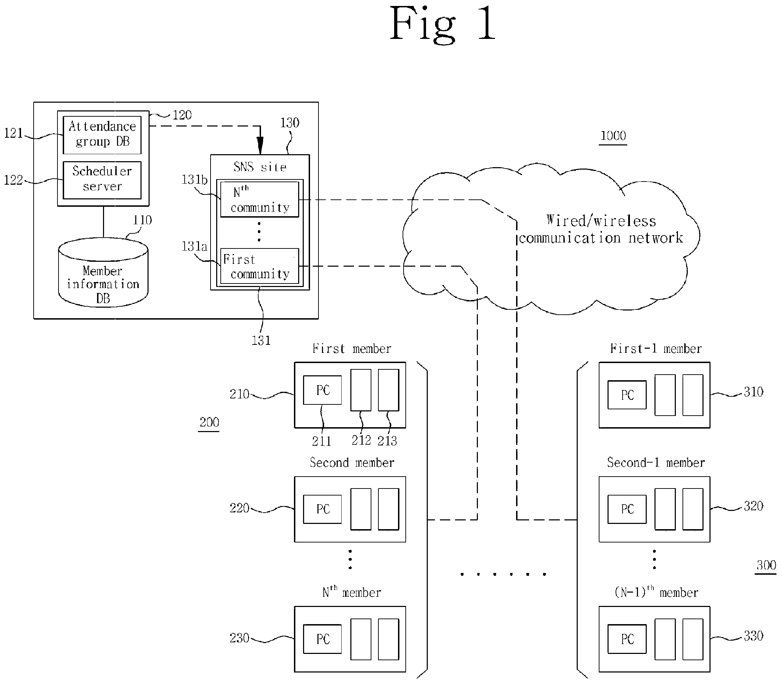

FIG. 1 shows a construction of a community scheduler system 1000 in accordance with a first embodiment of the present invention.

As shown in FIG. 1 , the community scheduler system 1000 in accordance with the first embodiment of the present invention includes an SNS scheduling server 100 and a plurality of scheduler terminal groups 200 and 300.

First, the SNS scheduling server 100 according to the present invention functions to manage an SNS site 130 so that an SNS site is established in a plurality of the scheduler terminal groups 200 and 300, manage a plurality of communities 131, 131a, and 131b established in the SNS site 130, and manage members (e.g., register, modify, and delete members) in each of the communities 131.

In particular, the SNS scheduling server 100 performs not only SNS that is widely known, but also provides a new form of SNS for organizing (determining) a meeting by applying a meeting scheduling algorithm to members who have been registered with each community.

To this end, the SNS scheduling server 100 of the present invention includes a member information database (DB) 110 and an SNS server 120. The member information DB 110 functions to distinguish the plurality of communities 131, established in the SNS site 130, from one another and store and manage information on members who have been registered with each of the communities 131.

In contrast, the SNS server 120 functions to substantially provide SNS to members for each community based on information on the members of the community 131 stored in the member information DB 110 and also perform the organization of a meeting by applying a new form of a scheduling scheme to the meeting, while operating in conjunction with the member information DB 110.

As a detailed scheme for implementing the scheduling scheme for the organization of a meeting, the SNS server 120 of the present invention can include an attendance group DB 121 and a scheduler server 122. The attendance group DB 121 performs a function of registering each member with any one of an essential attendance group, a selective attendance group, and an irrelevance attendance group based on information on the members of the community 131 stored in the member information DB 110.

For example, if persons registered as the members of a first community established in the SNS site 130 are classified into a superintendent, a sponsor, and normal members and registered, the superintendent (e.g., the superintendent can include a number of members and the superintendent can also be called a chief secretary or a manager), that is, a person who has substantially established the first community, from among the members of the first community, can be registered with an essential attendance group.

In addition, the essential attendance group can further include a sponsor (1 person), that is, the president, and the number of legislative members, that is, the number of members necessary to decide a meeting, from among the members of the first community. The number of legislative members is determined depending on how many members are included in a total quorum. For example, assuming that the number of members who must take part in a meeting, from among a 1000-person quorum in the first community, is 300 members, 600 members will become the number of legislative members. The number of legislative members can be determined by checking the number of members who have determined to take part in a meeting and which have been obtained by a scheduling algorithm to be described later.

The registration of the essential attendance group including the superintendent, the sponsor, and the number of legislative members as described above is known to all the members of the first community. If an intention of organizing a meeting is received from some of the members, a registration condition is that some of the members are the subjects who must take part in the meeting.

In contrast, the selective attendance group is a group including members who are not the subjects who must accept a meeting, but are the subjects who hopefully attend the meeting. For example, the selective attendance group further includes conditions of a quorum in addition to a superintendent, a sponsor, and the number of legislative members. The quorum refers to a minimum number of members on which a meeting needs to be essentially approved, from among the members of the first community. For example, assuming that a minimum number of members on which a meeting needs to be approved, from 1000 members, is 70%, 700 members (70%) become a quorum.

Furthermore, the irrelevance attendance group is a group including members whose attendance at a meeting is never important and whose degree of attendance is permitted depending on their intentions. For example, the irrelevance attendance group can further include conditions of optioners in addition to a superintendent, a sponsor, the number of legislative members, and a quorum.

A member corresponding to the optioner is the subject whose attendance at a meeting is not so much important and may be a very small numerical value. Here, the conditions of the number of legislative members and the quorum have different values depending on the determination of a sponsor who is a substantial operator of the first community.

As described above, the subjects registered as members for each community are classified into the subjects within the attendance groups and registered with the attendance group DB 121 of the present invention. Here, the attendance groups are utilized in the order-of-priority algorithm of the scheduler server 122.

That is, the scheduler server 122 of the present invention functions to sequentially assign the order of priority to the essential attendance group, the selective attendance group, and the irrelevance attendance group registered with the attendance group DB 121, determine whether the number of members is satisfied or not for each attendance group according to the order of priority, and determine a meeting date that has been selected the most, from pieces of information on a plurality of meeting dates known to all the members of the community 131, by way of a sorting process in order of increasing participants for each degree of importance. Here, if, as a result of the determination, the number of members is satisfied.

For example, a sponsor informs all the members of a first community of information on a meeting schedule including a plurality of meeting dates, purports, objects, and places. Next, each subject of members who have consented agree to a meeting verifies whether a superintendent, a sponsor, and the number of legislative members satisfy the defined number of members of the essential attendance group or not. If, as a result of the verification, the superintendent, the sponsor, and the number of legislative members satisfy the defined number of members of an essential attendance group, each subject verifies whether the superintendent, the sponsor, and the number of legislative members satisfy the number of members of the selective attendance group or not. If, as a result of the verification, the superintendent, the sponsor, and the number of legislative members satisfy the number of members of the selective attendance group, each subject verifies whether the superintendent, the sponsor, and the number of legislative members satisfy the number of members of the irrelevance attendance group or not. A meeting date will be determined by checking the degree of participation for each level of each member according to a result of the verification and a meeting date selected with the highest frequency.

If the number of members within the essential attendance group is not satisfied, the meeting itself will be inevitably cancelled.

As described above, the scheduler server 122 officially informs each member of a meeting schedule in order to rapidly determine a meeting for each community established in an SNS site and checks an intention of each member through the scheduling algorithm. Accordingly, a new form of SNS can be expected.

Furthermore, each of the plurality of scheduler terminal groups 200 and 300 of the present invention downloads an SNS site, registers a person as a member of each community within the SNS site or cancels the member of each community within the SNS site, and decides its own meeting intension in response to a meeting schedule when the meeting schedule is received. The plurality of scheduler terminal groups 200 and 300 includes a plurality of first group scheduler terminals 200 which has subscribed to a first community and a plurality of second group scheduler terminals 300 which has subscribed to an N th community.

Each of the scheduler terminals 200 and 300 for each community is connected to the SNS scheduling server 100 over wired/wireless communication networks, and each of the scheduler terminals 200 and 300 can exchange desired data in its community. For example, each of scheduler terminals 210, 220, and 230 included in the first group scheduler terminal 200 can be any one of a PC, a mobile terminal, and a tablet PC.

For example, the first scheduler terminal 210 may be a PC 211 in the case of a wired communication network, and the first scheduler terminal 210 may be either a mobile terminal 212 (e.g., a smart phone, a 3G terminal, or a 4G terminal) or a tablet terminal 213 in case of a wireless communication network.

Likewise, the second group scheduler terminal 300 is the same as the first group scheduler terminal 200, and scheduler terminals 310, 320, and 330 included in the second group scheduler terminal 300 are the same as the scheduler terminals 210, 220, and 230 included in the first group scheduler terminal 200. The SNS server 120 is described in more detail below.

### Example of the SNS server

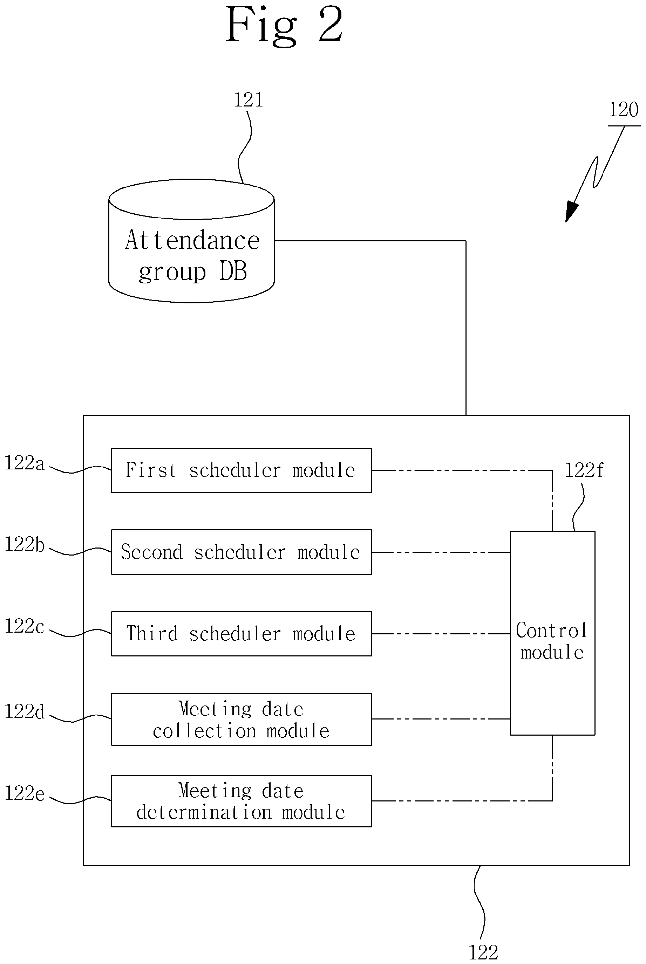

FIG. 2 shows a detailed construction of the SNS server 120 in accordance with the first embodiment of the present invention.

As shown in FIG. 2, the SNS server 120 in accordance with the first embodiment of the present invention includes the attendance group DB 121 and the scheduler server 122, as described with reference to FIG. 1 . The scheduler server 122 includes a first scheduler module 122a, a second scheduler module 122b, a third scheduler module 122c, a meeting date collection module 122d, a meeting date determination module 122e, and a control module 122f.

Each of the elements of the scheduler server 122 is described below. First, when the attendance group DB 121 registers a sponsor, a superintendent, and legislative members, from among the members of the community 131, as an essential attendance group, the first scheduler module 122a of the present invention functions to check whether the number of members is satisfied or not by checking whether the number of members including the sponsor, the superintendent, and the legislative members within the essential attendance group falls within a predetermined numerical value or not.

For example, the first scheduler module 122a of the present invention can check whether the number of members within the essential attendance group is satisfied or not based on the number of members who have determined a meeting and the decision-making of each of the members (e.g., whether each member has accepted the meeting or not and a meeting date).

The second scheduler module 122b of the present invention is a module that is executed only when a result of the determination of the first scheduler module 122a is satisfied. When the attendance group DB 121 registers a sponsor, a superintendent, legislative persons, and a quorum, from among the members of the community 131, as a selective attendance group, the second scheduler module 122b of the present invention functions to check whether the number of members is satisfied or not by checking whether the number of members including the sponsor, the superintendent, the legislative members, and the quorum within the selective attendance group falls within a predetermined numerical value or not.

For example, the second scheduler module 122b of the present invention can check whether the number of members within the selective attendance group is satisfied or not based on the number of members who have determined a meeting and the decision-making of each of the members (e.g., whether each member has accepted the meeting or not and a meeting date).

The third scheduler module 122c of the present invention is a module that is executed only when a result of the determination of the second scheduler module 122b is satisfied. When the attendance group DB 121 registers a sponsor, a superintendent, legislative persons, a quorum, and optioners, from among the members of the community 131, as an irrelevance attendance group, the third scheduler module 122c of the present invention functions to check whether the number of members is satisfied or not by checking whether the number of members including the sponsor, the superintendent, the legislative members, the quorum, and the optioners within the irrelevance attendance group falls within a predetermined numerical value or not.

For example, the third scheduler module 122c of the present invention can check whether the number of members within the irrelevance attendance group is satisfied or not based on the number of members who have determined a meeting and the decision-making of each of the members (e.g., whether each member has accepted the meeting or not and a meeting date).

Furthermore, the meeting date determination module 122d of the present invention functions to receive a plurality of meeting dates generated at the request of a superintendent of the community 131, transfer the plurality of meeting schedules to all the members of the community 131, and collect meeting dates selected by the members of the community 131 (substantially from the scheduler terminals). The meeting dates can be provided as basic data for the scheduler modules 122a, 122b, and 122c.

In contrast, the meeting date determination module 122e of the present invention functions to incorporate information on a meeting date that has been selected the most, from among the meeting dates collected by the meeting date collection module 122d, into determination made by each of the scheduler modules 122a, 122b, and 122c and determine a meeting. A result of the determination of the meeting date determination module 122e is transferred to all the members of the community 131.

Furthermore, the control module 122f of the present invention functions to control the flow of data between the attendance group DB 121, the first scheduler module 122a, the second scheduler module 122b, the third scheduler module 122c, the meeting date collection module 122d, and the meeting schedule determination module 122e.

As a result, in the present embodiment, a new form of SNS can be expected because intentions of various members for the organization of a meeting in each community can be immediately checked and a meeting can be determined based on the intentions.

### Second embodiment

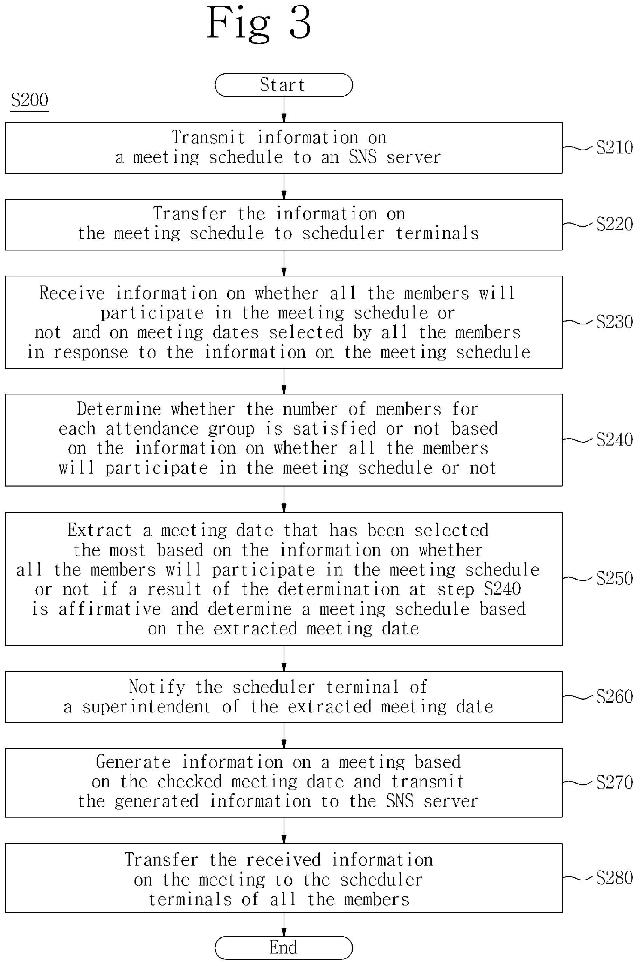

FIG. 3 is an exemplary diagram illustrating a scheduling method S200 in a community in accordance with a second embodiment of the present invention.

As shown in FIG. 3 , the scheduling method S200 in a community in accordance with the second embodiment of the present invention includes transmitting information on a meeting schedule to the SNS server 120 at step S210, the SNS server 120 transferring the information on the meeting schedule to the scheduler terminals 200 and 300 at step S220, the SNS server 120 receiving information on whether all the members will participate in the meeting schedule or not (i.e., whether all the members have accepted the meeting schedule or not) and on meeting dates selected by all the members in response to the information on the meeting schedule at step S230, the SNS server 120 determining whether the number of members for each attendance group is satisfied or not based on the information on whether all the members will participate in the meeting schedule or not at step S240, and the SNS server 120 extracting a meeting date that has been selected the most based on the information on whether all the members will participate in the meeting schedule or not if a result of the determination at step S240 is affirmative, and the SNS server 120 determining a meeting schedule based on the extracted meeting date at step S250.

First, at the step S210 of the present invention, a superintendent, from among members who have subscribed to a specific community 310, selects a meeting object, a meeting place, and a plurality of meeting dates and times and sends information on a generated meeting schedule to the SNS server 120. Here, the superintendent is a member who substantially controls and manages a first community, for example, and may announce a meeting, receive an answer to the official announcement, and participate in the determination of a meeting.

Next, at the step S220 of the present invention, the SNS server 120 transfers information on the received meeting schedule to the scheduler terminals 200 and 300 which are owned by all the members of the community 310. Next, at the step S230 of the present invention, the SNS server 120 receives information on whether the members will participate in the meeting or not and on the meeting dates, which are generated in response to the information on the meeting schedule, from the scheduler terminals 200 and 300 which have checked the information on the meeting schedule. The information on whether the members will participate in the meeting or not and on the meeting dates includes decision-making contents selected by all the members of the community 310.

Next, at the step S240 of the present invention, the SNS server 120 determines whether the number of members for each attendance group that has been defined according to the order of priority is satisfied or not based on the information on whether the members will participate in the meeting or not at the S230. Here, the attendance groups include an essential attendance group, a selective attendance group, and an irrelevance attendance group. Each of the essential attendance group, the selective attendance group, and the irrelevance attendance group and a determination algorithm have been described with reference to FIGS. 1 and 2 , and thus a description thereof is omitted.

Next, at the step S250 of the present invention, if a result of the determination at the step S240 is affirmative, the SNS server 120 extracts a meeting date that has been selected the most based on information on a first meeting date that has been sent by members who will participate in the meeting, from among pieces of information on the meeting dates, and determines a meeting schedule based on the extracted meeting date.

Meanwhile, the scheduling method S200 in a community in accordance with the second embodiment of the present invention may further include the SNS server 120 notifying the scheduler terminals 200 and 300 of the superintendents of the extracted meeting date at step S260, the superintendents generating information on the meeting based on the meeting date checked by the scheduler terminals 200 and 300 and sending the generated information to the SNS server 120 at step S270, and the SNS server 120 transferring the received information on the meeting to the scheduler terminals 200 and 300 of all the members including the scheduler terminals of the members who will participate in the meeting at step S280.

### Third embodiment

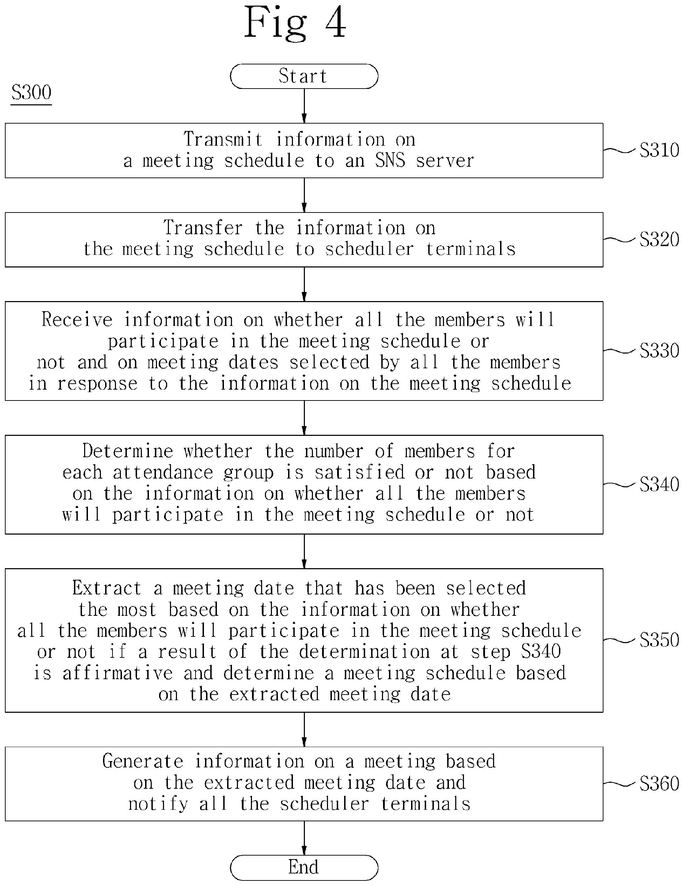

FIG. 4 is an exemplary diagram illustrating a scheduling method S300 in a community in accordance with a third embodiment of the present invention.

As shown in FIG. 4 , the scheduling method S300 in a community in accordance with the third embodiment of the present invention includes sending information on a meeting schedule to the SNS server 120 at step S310, the SNS server 120 transferring the information on the meeting schedule to the scheduler terminals 200 and 300 or a variety of devices at step S320, the SNS server 120 receiving information on whether all the members will participate in a meeting or not (i.e., all the members accept the meeting or not) and on meeting dates in response to the information on the meeting schedule at step S330, the SNS server 120 determining whether the number of members for each attendance group is satisfied or not based on the information on whether all the members will participate in a meeting or not at step S340, the SNS server 120 extracting a meeting date that has been selected the most based on the information on whether all the members will participate in a meeting or not if a result of the determination at the step S340 is affirmative and determining the meeting schedule based on the extracted meeting date at step S350, and the SNS server 120 generating information on the meeting based on the extracted meeting date and notifying the scheduler terminals 200 and 300 of all the members including the scheduler terminal of the superintendents of the information on the meeting at step S3360.

Here, the remaining steps other than the step S360 are the same as those of FIG. 3 and thus a description thereof is omitted. Unlike at the steps S260, S270, and S280 of FIG. 3 , at the step S360 that is the last step of the present invention, the SNS server 120 automatically generates information on the meeting and automatically notifies all the scheduler terminals 200 and 300 of the generated information. That is, a process of a superintendent generating the information on the meeting is omitted, and instead the SNS server 120 automatically generates the information on the meeting and sends the generated information to all the scheduler terminals 200 and 300.

As described above, in the method in accordance with the second embodiment or the third embodiment of the present invention, when a superintendent notifies a meeting in a specific community, decision-making collected from all the members of the community is determined according to the order of priority and all the members including the superintendent is rapidly informed of a result of the determination. Accordingly, there is an advantage in that a new form of a meeting process that cannot be seen in the existing SNS can be provided.

In accordance with the present invention, a meeting is easily notified in each community in which bidirectional communication is performed, intentions of all members are taken into consideration in real time, and a scheduling algorithm, that is, a predetermined route, is used so that a meeting can be rapidly organized. Accordingly, there is an advantage in that a new form of a community meeting environment can be formed unlike a community environment having the existing simple communication form.

Furthermore, in accordance with the present invention, the schedules of other members associated with oneself over a bidirectional network are automatically registered and changed depending on his or her schedule, and a change of other members' schedules affects his or her schedule, thereby enabling a rapid response. Accordingly, there is an advantage in that a meeting can be optimally organized in a community.

Accordingly, profits can be made from a viewpoint of an initiator because a new form of SNS is made possible. Furthermore, profits may be maximized by adding advertisement and events to SNS for the organization of a meeting.

While some embodiments of the invention have been described with reference to the accompanying drawings, a person having ordinary skill in the art to which the present invention pertains will appreciate that the present invention can be implemented into other detailed forms without changing the essential characteristics of the present invention as disclosed in the accompanying claims.

## Claims

1. An electronic community scheduler system, comprising:
a member information database (110) for distinguishing a plurality of communities established in a Social Networking Service (SNS) site from one another and managing and storing information on members of the communities; and
an SNS server (120) for providing the SNS to the members of each of the communities based on the information on the members of the communities,
wherein the SNS server comprises:
an attendance group database (121) for registering each of the members as belonging to an essential attendance group, a selective attendance group or an irrelevance attendance group based on the information on the members of the communities, wherein the essential attendance group comprises a superintendent, a sponsor and one or more legislative members, wherein the selective attendance group comprises the superintendent, the sponsor, the one or more legislative members, and a quorum, and wherein the irrelevance attendance group comprises the superintendent, the sponsor, the legislative members, the quorum and a plurality of optioners; and
a scheduler server (122) for sequentially assigning an order of priority to the essential attendance group, the selective attendance group, and the irrelevance attendance group and determining a preferred meeting date that has been selected the most from a plurality of meeting dates when a number of members of each attendance group according to the order of priority is satisfied , wherein the essential attendance group has a highest priority, the selective attendance group has the second highest priority and the irrelevance group has the lowest priority,
wherein the scheduler server (122) comprises:
a first scheduler module (122 a) for determining whether the number of the sponsor, the superintendent, and the legislative members in the essential attendance group falls within a range of a first predetermined numerical value;
a second scheduler module (122 b) for determining, only when the result of the determination of the first scheduler module (122a) is satisfied, whether the number of the sponsor, the superintendent, the legislative members, and the quorum in the selective attendance group falls within a range of a second predetermined numerical value; and
a third scheduler module (122 c) for determining, only when the result of the determination of the second scheduler (122b) is satisfied, whether the number of members of the sponsor, the superintendent, the legislative members, the quorum, and the number of optioners in the irrelevance attendance group falls within a range of a third predetermined numerical value,
wherein the first, the second, and the third predetermined numerical values are less than a total number of members in the essential attendance group, in the selective attendance group, and in the irrelevance attendance group, respectively.

2. The community scheduler system of claim 1, wherein the scheduler server (122) further comprises:
a meeting date collection module (122d) for receiving the plurality of meeting dates generated at the request of a superintendent of a specific community, transferring the meeting schedules to members of the specific community, and collecting meeting dates selected by the members of the specific community in response to the transfer; and
a meeting date determination module (122e) for incorporating information on the preferred meeting date from among information on the meeting dates collected by the meeting date collection module, into an affirmative determination corresponding to a range of a numerical value and transferring information on whether a meeting will be organized or not to all the member of the specific community.

3. A scheduling method in a community, comprising the steps of:
(a) a Social Networking Service (SNS) server (120) receiving information on a meeting date, comprising a meeting object, a meeting place, and a plurality of meeting dates and times, from a superintendent of a community;
(b) the SNS server (120) transferring the received information on the meeting dates to scheduler terminals or a variety of devices of all the members of the community;
(c) the SNS server (120) receiving information on whether all the members of the community will participate in a meeting or not and on meeting dates selected by all the members in response to the information on the meeting dates;
(d) the SNS server (120) determining whether a number of members for each of an essential attendance group, a selective attendance group and an irrelevance attendance group defined according to an order of priority is satisfied or not, wherein the essential attendance group has a highest priority, the selective attendance group has the second highest priority and the irrelevance attendance group has the lowest priority; and
(e)when a result of the determination at the step (d) is affirmative, the SNS server (120) extracting a meeting date that has been selected the most based on information on a first meeting date transmitted by members who will participate in the meeting, from among pieces of information on the meeting dates, and determining a meeting schedule based on the extracted meeting date,
wherein the essential attendance group comprises a superintendent, a sponsor and a plurality of legislative members, wherein the selective attendance group comprises the superintendent, the sponsor, the legislative members and a quorum, wherein the irrelevance attendance group comprises the superintendent, the sponsor, the legislative members, the quorum and a plurality of optioners
wherein, in step (d), a scheduler server (122) first determines by the first scheduler module (122a) whether the number of the sponsor, the superintendent, and the legislative members in the essential attendance group falls within a range of a first predetermined numerical value,
second, the scheduler server (122) determines by the second scheduler module (122b) and only when the result of the determination by the first scheduler module (122a) is satisfied, whether the number of the sponsor, the superintendent, the legislative members, and the quorum in the selective attendance group falls within a range of a second predetermined numerical value,
third, the scheduler server (122) determines by the third scheduler module (122c) and only after the determination by the second scheduler module (122b) is satisfied, whether the number of members of the sponsor, the superintendent, the legislative members, the quorum, and the number of optioners in the irrelevance attendance group falls within a range of a third predetermined numerical value.

4. The scheduling method of claim 3, further comprising the steps of:
(f) the SNS server (120) notifying a scheduler terminal or a variety of the devices of the superintendent of the extracted meeting date;
(g) the superintendent generating information on the meeting based on the meeting date checked by the scheduler terminal or a variety of the devices and transmitting the generated information to the SNS server (120); and
(h) the SNS server (120) transferring the received information on the meeting to the scheduler terminals of all the members including the scheduler terminals of the subjects who will participate in the meeting.

5. The scheduling method of claim 3, further comprising the step of (i) the SNS server (120) generating information on the meeting based on the extracted meeting date and notifying the scheduler terminals of all the members, including a scheduler terminal of the superintendent, of the information on the meeting.

6. The scheduling method of claim 3, wherein the information on the meeting schedule comprises information on a meeting object, a meeting place, and a plurality of meeting dates and times.

## Patentansprüche

1. Zeitplanersystem für elektronische Gemeinschaft, umfassend:
eine Mitgliedsinformationsdatenbank (110) zum Unterscheiden mehrerer in einer Social-Networking-Service-(SNS)-Webseite eingerichteter Gemeinschaften voneinander und zum Verwalten und Speichern von Information über Mitglieder der Gemeinschaften; und
einen SNS-Server (120) zum Bereitstellen des SNS an die Mitglieder jeder der Gemeinschaften auf Basis der Information über die Mitglieder der Gemeinschaften,
wobei der SNS-Server Folgendes umfasst:
eine Anwesenheitsgruppen-Datenbank (121) zum Registrieren jedes der Mitglieder, auf Basis der Information über Mitglieder der Gemeinschaften, als zugehörig einer zu wesentlichen Anwesenheitsgruppe, einer selektiven Anwesenheitsgruppe oder einer Irrelevanz-Anwesenheitsgruppe, wobei die wesentliche Anwesenheitsgruppe einen Leiter, einen Sponsor und ein oder mehrere legislative Mitglieder umfasst, wobei die selektive Anwesenheitsgruppe den Leiter, den Sponsor, das eine oder die mehreren legislativen Mitglieder und ein Quorum umfasst, und wobei die Irrelevanz-Anwesenheitsgruppe den Leiter, den Sponsor, die legislativen Mitglieder, das Quorum und mehrere Optionäre umfasst; und
einen Zeitplaner-Server (122) zum sequentiellen Zuweisen einer Prioritätsreihenfolge der wesentlichen Anwesenheitsgruppe, der selektiven Anwesenheitsgruppe und der Irrelevanz-Anwesenheitsgruppe und zum Bestimmen eines bevorzugten Meetingdatums, das unter mehreren Meetingdaten größtenteils ausgewählt worden ist, wenn eine Anzahl von Mitgliedern jeder Anwesenheitsgruppe gemäß der Prioritätsreihenfolge zufriedengestellt ist, wobei die wesentliche Anwesenheitsgruppe eine höchste Priorität hat, die selektive Anwesenheitsgruppe die zweithöchste Priorität hat und die Irrelevanz-Anwesenheitsgruppe die niedrigste Priorität hat,
wobei der Zeitplaner-Server (122) Folgendes umfasst:
ein erstes Zeitplaner-Modul (122a) zum Bestimmen, ob die Anzahl des Sponsors, des Leiters und der legislativen Mitglieder in der wesentlichen Anwesenheitsgruppe innerhalb eines Bereichs eines ersten im Voraus bestimmten numerischen Werts liegt;
ein zweites Zeitplaner-Modul (122b) zum Bestimmen, nur wenn das Ergebnis des Bestimmens des ersten Zeitplaner-Moduls (122a) zufriedenstellend ist, ob die Anzahl des Sponsors, des Leiters, der legislativen Mitglieder und des Quorums in der selektiven Anwesenheitsgruppe innerhalb eines Bereichs eines zweiten im Voraus bestimmten numerischen Werts liegt; und
ein drittes Zeitplaner-Modul (122c) zum Bestimmen, nur wenn das Ergebnis des Bestimmens des zweiten Zeitplaner-Moduls (122b) zufriedenstellend ist, ob die Anzahl von Mitgliedern des Sponsors, des Leiters, der legislativen Mitglieder, des Quorums und die Anzahl der Optionäre in der Irrelevanz-Anwesenheitsgruppe innerhalb eines Bereichs eines dritten im Voraus bestimmten numerischen Werts liegt,
wobei die ersten, die zweiten und die dritten bestimmten numerischen Werte geringer sind als eine Gesamtanzahl von Mitgliedern jeweils in der wesentlichen Anwesenheitsgruppe, in der selektiven Anwesenheitsgruppe und der Irrelevanz-Anwesenheitsgruppe.

2. Zeitplanersystem für Gemeinschaft nach Anspruch 1, wobei der Zeitplaner-Server (122) ferner umfasst:
ein Meetingdatum-Sammelmodul (122d) zum Empfangen der mehreren Meetingdaten, die auf die Anforderung eines Leiters einer spezifischen Gemeinschaft erzeugt worden sind, Übertragen der Meeting-Zeitplanungen an Mitglieder der spezifischen Gemeinschaft und Sammeln von Meetingdaten, die von den Mitgliedern der spezifischen Gemeinschaft als Reaktion auf die Übertragung ausgewählt worden sind; und
ein Meetingdatum-Bestimmungsmodul (122e) zum Einbringen von Information über das bevorzugte Meetingdatum aus Information über die vom Meetingdatum-Sammelmodul gesammelten Meetingdaten in ein affirmatives Bestimmen entsprechend einem Bereich eines numerischen Werts und Übertragen von Information darüber, ob ein Meeting für alle Mitglieder der spezifischen Gemeinschaft organisiert werden wird, oder nicht.

3. Zeitplanungsverfahren in einer Gemeinschaft, umfassend die folgenden Schritte:
(a) ein Social-Networking-Service- (SNS)-Server (120) empfängt Information über ein Meetingdatum, die ein Meetingobjekt, einen Meetingort und mehrere Meetingdaten und - termine enthält, von einem Leiter einer Gemeinschaft;
(b) der SNS-Server (120) überträgt die empfangene Information über die Meetingdaten an Zeitplaner-Terminals oder eine Vielzahl von Geräten aller Mitglieder der Gemeinschaft;
(c) der SNS-Server (120) empfängt Information darüber, ob alle Mitglieder der Gemeinschaft an einem Meeting teilnehmen werden oder nicht, und über von allen Mitgliedern als Reaktion auf die Information über die Meetingdaten gewählte Meetingdaten;
(d) der SNS-Server (120) bestimmt, ob eine Anzahl von Mitgliedern jeder der wesentlichen Anwesenheitsgruppe, der selektiven Anwesenheitsgruppe und der Irrelevanz-Anwesenheitsgruppe, die gemäß einer Prioritätsreihenfolge definiert sind, zufriedengestellt ist oder nicht, wobei die wesentliche Anwesenheitsgruppe eine höchste Priorität hat, die selektive Anwesenheitsgruppe die zweithöchste Priorität hat und die Irrelevanz-Anwesenheitsgruppe die niedrigste Priorität hat; und
(e) wenn ein Ergebnis des Bestimmens in Schritt (d) affirmativ ist, extrahiert der SNS-Server (120) ein Meetingdatum, das, auf Basis von Information über ein erstes Meetingdatum von Mitgliedern, die an dem Meeting teilnehmen werden, unter Informationen über die Meetingdaten größtenteils ausgewählt worden ist, und Bestimmen eines Meeting-Zeitplans auf Basis des extrahierten Meetingdatums,
wobei die wesentliche Anwesenheitsgruppe einen Leiter, einen Sponsor und eine Vielzahl von legislativen Mitgliedern umfasst, wobei die selektive Anwesenheitsgruppe den Leiter, den Sponsor, die legislativen Mitglieder und ein Quorum umfasst, wobei die Irrelevanz-Anwesenheitsgruppe den Leiter, den Sponsor, die legislativen Mitglieder, das Quorum und mehrere Optionäre umfasst,
wobei, in Schritt (d), ein Zeitplaner-Server (122) zuerst durch das erste Zeitplaner-Modul (122a) bestimmt, ob die Anzahl des Sponsors, des Leiters und der legislativen Mitglieder in der wesentlichen Anwesenheitsgruppe innerhalb eines Bereichs eines ersten im Voraus bestimmten numerischen Werts liegt,
zweitens, der Zeitplaner-Server (122) durch das zweite Zeitplaner-Modul (122b) und nur, wenn das Ergebnis des Bestimmens durch das erste Zeitplaner-Modul (122a) zufriedenstellend ist, bestimmt, ob die Anzahl des Sponsors, des Leiters, der legislativen Mitglieder und des Quorums in der selektiven Anwesenheitsgruppe innerhalb eines Bereichs eines zweiten im Voraus bestimmten numerischen Werts liegt,
drittens, der Zeitplaner-Server (122) durch das zweite Zeitplaner-Modul (122b) und nur, nachdem das Bestimmen durch das zweite Zeitplaner-Modul (122b) zufriedenstellend ist, bestimmt, ob die Anzahl von Mitgliedern des Sponsors, des Leiters, der legislativen Mitglieder, des Quorums und die Anzahl der Optionäre in der Irrelevanz-Anwesenheitsgruppe innerhalb eines Bereichs eines dritten im Voraus bestimmten numerischen Werts liegt.

4. Zeitplanungsverfahren nach Anspruch 3, ferner umfassend die folgenden Schritte:
(f) der SNS-Server (120) benachrichtigt ein Zeitplaner-Terminal oder eine Vielzahl der Geräte des Leiters über das extrahierte Meetingdatum;
(g) der Leiter erzeugt Information über das Meeting auf Basis des Meetingdatums, das vom Zeitplaner-Terminal oder einer Vielzahl der Geräte geprüft worden ist, und überträgt die erzeugte Information an den SNS-Server (120); und
(h) der SNS-Server (120) überträgt die empfangene Information über das Meeting an die Zeitplaner-Terminals aller Mitglieder einschließlich der Zeitplaner-Terminals des Leiters, die an dem Meeting teilnehmen werden.

5. Zeitplanungsverfahren nach Anspruch 3, ferner umfassend den Schritt (i) des SNS-Servers (120), der Information über das Meeting auf Basis des extrahierten Meetingdatums erzeugt und die Zeitplaner-Terminals aller Mitglieder einschließlich des Zeitplaner-Terminals des Leiters über die Information über das Meeting benachrichtigt.

6. Zeitplanungsverfahren nach Anspruch 3, wobei die Information über den Meeting-Zeitplan Information über ein Meetingobjekt, einen Meetingort und mehrere Meetingdaten und -termine enthält.

## Revendications

1. Système de planificateur de communauté électronique, comprenant :
une base de données d'informations de membres (110) pour distinguer une pluralité de communautés établies dans un site de service de réseautage social (SNS) les unes des autres et pour gérer et mémoriser des informations concernant les membres des communautés ; et
un serveur de SNS (120) pour fournir le SNS aux membres de chacune des communautés sur la base des informations concernant les membres des communautés,
dans lequel le serveur de SNS comprend :
une base de données de groupes de présences (121) pour enregistrer chacun des membres comme appartenant à un groupe de présences essentielles, un groupe de présences sélectives ou un groupe de présences non pertinentes sur la base des informations concernant les membres des communautés, dans lequel le groupe de présences essentielles comprend un directeur, un sponsor et un ou plusieurs membres législatifs, dans lequel le groupe de présences sélectives comprend le directeur, le sponsor, lesdits un ou plusieurs membres législatifs, et un quorum, et dans lequel le groupe de présences non pertinentes comprend le directeur, le sponsor, les membres législatifs, le quorum et une pluralité de membres optionnels ; et
un serveur de planificateur (122) pour attribuer séquentiellement un ordre de priorité au groupe de présences essentielles, au groupe de présences sélectives, et au groupe de présences non pertinentes et pour déterminer une date de réunion préférée qui a été la plus sélectionnée parmi une pluralité de dates de réunion lorsqu'un nombre de membres de chaque groupe de présences conformément à l'ordre de priorité est satisfait, dans lequel le groupe de présences essentielles a une priorité la plus élevée, le groupe de présences sélectives a la deuxième priorité la plus élevée et le groupe non pertinent a la priorité la plus faible,
dans lequel le serveur de planificateur (122) comprend :
un premier module de planificateur (122a) pour déterminer si le nombre du sponsor, du directeur, et des membres législatifs dans le groupe de présences essentielles tombe dans une plage d'une première valeur numérique prédéterminée ;
un deuxième module de planificateur (122b) pour déterminer, uniquement lorsque le résultat de la détermination du premier module de planificateur (122a) est satisfait, si le nombre du sponsor, du directeur, des membres législatifs, et du quorum dans le groupe de présences sélectives tombe dans une plage d'une deuxième valeur numérique prédéterminée ; et
un troisième module de planificateur (122c) pour déterminer, uniquement lorsque le résultat de la détermination du deuxième planificateur (122b) est satisfait, si le nombre de membres du sponsor, du directeur, des membres législatifs, du quorum, et de membres optionnels dans le groupe de présences non pertinentes tombe dans une plage d'une troisième valeur numérique prédéterminée,
dans lequel les première, deuxième et troisième valeurs numériques prédéterminées sont inférieures à un nombre total de membres dans le groupe de présences essentielles, dans le groupe de présences sélectives, et dans le groupe de présences non pertinentes, respectivement.

2. Système de planificateur de communauté selon la revendication 1, dans lequel le serveur de planificateur (122) comprend en outre :
un module de collecte de dates de réunion (122d) pour recevoir la pluralité de dates de réunion générées à la demande d'un directeur d'une communauté spécifique, pour transférer les planifications de réunion aux membres de la communauté spécifique, et pour collecter les dates de réunion sélectionnées par les membres de la communauté spécifique en réponse au transfert ; et
un module de détermination de date de réunion (122e) pour incorporer des informations concernant la date de réunion préférée parmi les informations concernant les dates de réunion collectées par le module de collecte de dates de réunion, dans une détermination affirmative correspondant à une plage d'une valeur numérique et pour transférer des informations indiquant si une réunion sera organisée ou non à tous les membres de la communauté spécifique.

3. Procédé de planification dans une communauté, comprenant les étapes :
(a) de réception, par un serveur de service de réseautage social (SNS) (120), d'informations concernant une date de réunion, comprenant un objet de réunion, un lieu de réunion, et une pluralité de dates et d'heures de réunion, d'un directeur d'une communauté ;
(b) de transfert, par le serveur de SNS (120), des informations reçues concernant les dates de réunion à des terminaux de planificateur ou à divers dispositifs de tous les membres de la communauté ;
(c) de réception, par le serveur de SNS (120), d'informations indiquant si tous les membres de la communauté participeront à une réunion ou non et concernant les dates de réunion sélectionnées par tous les membres en réponse aux informations concernant les dates de réunion ;
(d) de détermination, par le serveur de SNS (120), si un nombre de membres pour chacun d'un groupe de présences essentielles, d'un groupe de présences sélectives et d'un groupe de présences non pertinentes définis conformément à un ordre de priorité est satisfait ou non, dans lequel le groupe de présences essentielles a une priorité la plus élevée, le groupe de présences sélectives a la deuxième priorité la plus élevée et le groupe de présences non pertinentes a la priorité la plus faible ; et
(e) lorsqu'un résultat de la détermination à l'étape (d) est affirmatif, par le serveur de SNS (120), d'extraction d'une date de réunion qui a été la plus sélectionnée sur la base d'informations concernant une première date de réunion transmise par les membres qui participeront à la réunion, des éléments d'informations concernant les dates de réunion, et de détermination d'une planification de réunion sur la base de la date de réunion extraite,
dans lequel le groupe de présences essentielles comprend un directeur, un sponsor et une pluralité de membres législatifs, dans lequel le groupe de présences sélectives comprend le directeur, le sponsor, les membres législatifs et un quorum, dans lequel le groupe de présences non pertinentes comprend le directeur, le sponsor, les membres législatifs, le quorum et une pluralité de membres optionnels,
dans lequel, à l'étape (d), un serveur de planificateur (122) premièrement détermine par le premier module de planificateur (122a) si le nombre du sponsor, du directeur, et des membres législatifs dans le groupe de présences essentielles tombe dans une plage d'une première valeur numérique prédéterminée,
deuxièmement, le serveur de planificateur (122) détermine par le deuxième module de planificateur (122b) et uniquement lorsque le résultat de la détermination du premier module de planificateur (122a) est satisfait, si le nombre du sponsor, du directeur, des membres législatifs, et du quorum dans le groupe de présences sélectives tombe dans une plage d'une deuxième valeur numérique prédéterminée,
troisièmement, le serveur de planificateur (122) détermine par le troisième module de planificateur (122c) et uniquement après que la détermination par le deuxième module de planificateur (122b) est satisfaite, si le nombre de membres du sponsor, du directeur, des membres législatifs, du quorum, et de membres optionnels dans le groupe de présences non pertinentes tombe dans une plage d'une troisième valeur numérique prédéterminée.

4. Procédé de planification selon la revendication 3, comprenant en outre les étapes :
(f) de notification, par le serveur de SNS (120), à un terminal de planificateur ou à divers dispositifs du directeur, de la date de réunion extraite ;
(g) par le directeur, de génération d'informations concernant la réunion sur la base de la date de réunion vérifiée par le terminal de planificateur ou les divers dispositifs et de transmission des informations générées au serveur de SNS (120) ; et
(h) de transfert, par le serveur de SNS (120), des informations reçues concernant la réunion aux terminaux de planificateur de tous les membres comprenant les terminaux de planificateur des sujets qui participeront à la réunion.

5. Procédé de planification selon la revendication 3, comprenant en outre l'étape (i), par le serveur de SNS (120), de génération d'informations concernant la réunion sur la base de la date de réunion extraite et de notification aux terminaux de planificateur de tous les membres, comprenant un terminal de planificateur du directeur, des informations concernant la réunion.

6. Procédé de planification selon la revendication 3, dans lequel les informations concernant la planification de réunion comprennent des informations concernant un objet de réunion, un lieu de réunion, et une pluralité de dates et d'heures de réunion.
